# EUROPÄISCHE PATENTSCHRIFT

(11) **EP 2 522 875 B1**
(45) Veröffentlichungstag und Bekanntmachung des Hinweises auf die Patenterteilung: **23.08.2017**
(21) Anmeldenummer: 12003553.0
(22) Anmeldetag: 07.05.2012
(51) Int. Cl.: F16D 65/12

(54) **Verfahren zum Herstellen einer Verbundguss-Bremsscheibe**
Method for producing a compound cast brake disc
Procédé de fabrication d'un disque de frein à coulée composite

(30) Priorität: 11.05.2011 DE 102011101126
(43) Veröffentlichungstag der Anmeldung: 14.11.2012
(73) Patentinhaber: Audi AG, 85045 Ingolstadt (DE)
(72) Erfinder: Saame, Christoph, 85080 Gaimersheim (DE); Brinkmann, Matthias, 85057 Ingolstadt (DE)
(74) Vertreter: Asch, Konrad

(56) Entgegenhaltungen:
- EP-A1- 1 743 739
- EP-A1- 1 972 823
- EP-A2- 1 018 381
- DE-A1- 4 418 889
- DE-A1- 4 436 653
- DE-A1-102009 049 315

## Beschreibung

Die vorliegende Erfindung betrifft ein Verfahren zum Herstellen einer Verbundguss-Bremsscheibe für Scheibenbremsen, insbesondere von Kraftfahrzeugen, gemäß dem Oberbegriff des Patentanspruchs 1.

Ein gattungsgemäßes Verfahren beschreibt die EP 2275702 A2, bei dem ein Reibring aus einer GG-Legierung über radial nach innen ragende Mitnehmer mit einem Scheibentopf aus einer Leichtmetalllegierung im Verbundgussverfahren zu einer Bremsscheibe verbunden wird. Der dort im Sandgussverfahren hergestellte Reibring bzw. dessen Mitnehmer muss bzw. müssen hier zwingend einer relativ kostenintensiven, spanenden Bearbeitung unterzogen werden, um eine exakte Positionierung zum Scheibentopf im nachfolgenden Verbundgießen in einem Kokillen-Gießwerkzeug sicherzustellen. Lediglich für den Fall, dass der Reibring nicht aus Sandguss hergestellt wird, sondern im aufwändigen und teuren Dauerformguss bzw. Kokillenguss. wird erwähnt, dass es gegebenenfalls in diesem Fall möglich sein könnte, den Oberflächenbehandlungsschritt im Hinblick auf die Mitnehmer wegzulassen. Dies betrifft jedoch ausdrücklich nur das Gießen in Dauerformen.

Aufgabe der Erfindung ist es, ein demgegenüber kostengünstigeres Verfahren zum Herstellen einer Verbundguss-Bremsscheibe aufzuzeigen.

Die Lösung dieser Aufgabe gelingt mit den Merkmalen des Patentanspruchs 1. Vorteilhafte Weiterbildungen des Verfahrens sind Gegenstand der Unteransprüche.

Die Erfindung betrifft ein Verfahren zum Herstellen einer Verbundguss-Bremsscheibe für Scheibenbremsen, insbesondere von Kraftfahrzeugen, bei dem eine ringförmige Bremsscheibe mit mehreren, radial nach innen und/oder außen ragenden Mitnehmern in einem ersten Gießvorgang mit verlorenem Kern dergestalt vorgegossen wird, dass der Kern die Mitnehmer direkt ausbildet, und dass dann der Reibring in eine Gießform eingelegt und an dessen Mitnehmer in einem zweiten Gießvorgang ein Scheibentopf angegossen wird, wobei die Reibscheibe dem zweiten Gießvorgang ohne spanende Bearbeitung der Mitnehmer zugeführt wird. Überraschend wurde erkannt, dass bei einer Ausbildung der Mitnehmer durch einen Kern und somit nicht durch die Formhälften einer Gießform ohne wesentliche Beeinträchtigung der Bauteilqualität auf eine spanende, kostenintensive Bearbeitung der Mitnehmer des Reibringes verzichtet werden kann, insbesondere wenn zum Beispiel durch Sichtkontrolle oder optische Scannung gröbere gießtechnische Fehler an den Reibscheiben bzw. an deren Mitnehmern ausgesondert werden und/oder spezielle Gießverfahren eingesetzt werden. Die Festigkeit der Mitnehmer wird dadurch erhalten, dass die Gussoberfläche der Mitnehmer unbearbeitet roh bleibt.

Des Weiteren kann es vorteilhaft sein, wenn die Reibscheibe bzw. deren Mitnehmer nach dem ersten Gießvorgang einem spanlosen Putzvorgang, insbesondere einer entgratenden Strahlbehandlung bzw. einem Kugelstrahlen unterzogen werden. Eine derartige Behandlung ist mit wenig fertigungstechnischem Aufwand verbunden und stellt sicher, dass gegebenenfalls vorhandene Grate an den Mitnehmern die Positionierung der Reibscheibe im Verbundgusswerkzeug nicht beeinträchtigen.

Zur Herstellung eines innenbelüfteten Reibringes der Bremsscheibe wird ferner vorgeschlagen, dass bei dem Gießverfahren mit verlorenem Kern ein die Kühlkanäle im Reibring abbildender, mittlerer und scheibenförmiger Innenkern verwendet wird (zum Beispiel dreischalige Gussform) und dass der Innenkern die Mitnehmer unmittelbar mit abbildet. Dies hat den wesentlichen Vorteil, dass u.a. die Mitnehmer unter Ausschaltung typischer Toleranzen im Gießwerkzeug präziser positioniert sind und dass bei verbesserter Oberflächenqualität an den Mitnehmern keine Trennränder und Formversätze in der Teilungsebene wie bei zweischaligen Gussformen auftreten. Der mittlere (verlorene) Innenkern kann präzise und durch die bevorzugt dreiteilige Konfiguration der Gussform kostengünstig gefertigt werden.

Zu einer noch weiterführenden Fertigungsvereinfachung kann der scheibenförmige Innenkern zweiteilig ausgeführt werden, wobei ein radial äußerer Kernring die die Kühlkanäle begrenzenden Stege und eine innere, in den Kernring über Kernmarken formschlüssig eingesetzte Kernscheibe die Mitnehmer über entsprechend angeformte Butzen abbildet.

Der Reibring wird bevorzugt im Sandgussverfahren aus einer Grauguss (GG)-Legierung hergestellt. Der Scheibentopf kann grundsätzlich durch jedes geeignete Leichtmetall-Gussverfahren hergestellt werden, wobei dessen Herstellung im Kokillengussverfahren oder im Sandgussverfahren aus einer Leichtmetalllegierung, zum Beispiel einer Al-Leichtmetalllegierung, bevorzugt ist. Es sind gegebenenfalls aber auch andere Werkstoffe einsetzbar, die im Verbundgießverfahren verarbeitbar sind.

Schließlich kann alternativ zu dem beschriebenen Sandgussverfahren auch das Lost Foam Verfahren als Gießverfahren für die Reibscheibe eingesetzt werden, das unter Verwendung von verdampfbaren Schaumstoffmodellen in einer ungeteilten Form gratfreie und maßgenaue Abgüsse mit guten Oberflächeneigenschaften ermöglicht, die sich dann für das weitere Verbundgießen mit dem Scheibentopf besonders eignen.

Ferner wird eine Verbundguss-Bremsscheibe beansprucht, die die zuvor bereits genannten Vorteile aufweist.

Mehrere Ausführungsbeispiele des erfindungsgemäßen Verfahrens sind im Folgenden näher erläutert. Die beigefügte, schematische Zeichnung zeigt in:
- Fig. 1: eine teilweise dargestellte Bremsscheibe mit einem innenbelüfteten Reibring und einem Scheibentopf als Verbundguss-Bauteil in einem Schnitt entlang der Drehachse der Bremsscheibe;
- Fig. 2: einen Querschnitt gemäß Linie II -II der Fig. 1 durch den Reibring der Bremsscheibe nach dessen Herstellung im Sandgussverfahren;
- Fig. 3: einen weiteren Querschnitt gemäß Linie II - II der Fig. 1 durch die komplette Bremsscheibe nach dem Verbundgießen im Kokillengießverfahren;
- Fig. 4: einen scheibenförmigen, einteiligen Innenkern einer Sandgussform zum Herstellen eines innenbelüfteten Reibringes von Bremsscheiben;
- Fig. 5: einen alternativen, zweiteiligen Innenkern einer Sandgussform nach Fig. 4;
- Fig. 6: einen vergrößerten Abschnitt des äußeren Kernrings des Innenkerns der Sandgussform nach Fig. 5 mit angeformten Kernmarkern; und
- Fig. 7: ebenfalls in vergrößerter Darstellung einen Ausschnitt der inneren Kernscheibe des Innenkerns nach Fig. 5 mit die Kernmarker aufnehmenden Ausnehmungen und die Mitnehmer abbildenden Butzen.

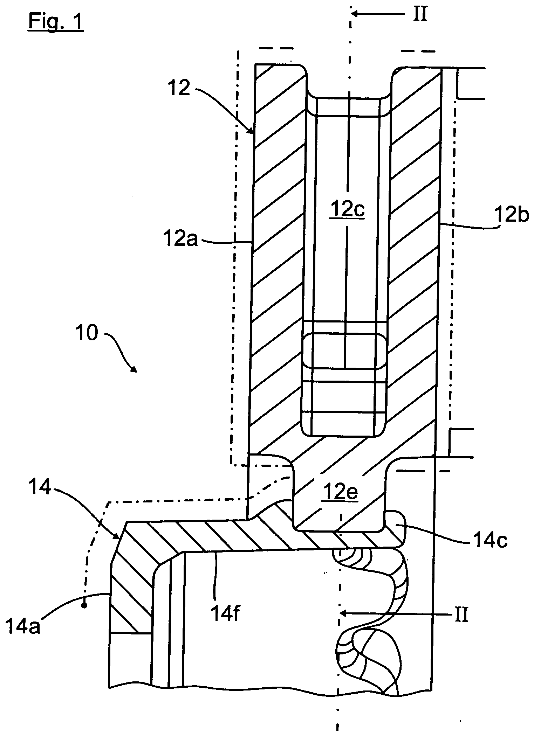

Die Fig. 1 zeigt teilweise eine im Verbundgussverfahren hergestellte Bremsscheibe 10 für Scheibenbremsen in Kraftfahrzeugen, die sich im Wesentlichen aus einem innenbelüfteten Reibring 12 und einem radial nach innen anschließenden Scheibentopf 14 zusammensetzt.

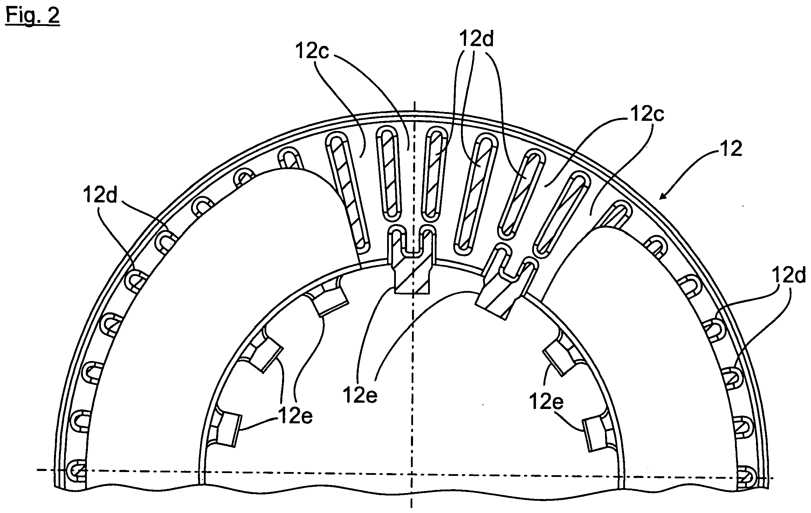

Der Reibring 12 (vergleiche auch Fig. 2) setzt sich aus zwei, umlaufende Bremsflächen bildenden Teilringen 12a, 12b zusammen, die durch mittlere, radiale Luftkanäle 12c unterteilende Stege 12d miteinander fest verbunden sind.

Ferner sind an die Teilringe 12a, 12b radial nach innen ragende, stiftförmige Mitnehmer 12e angeformt, die zur gießtechnischen Verbindung mit dem Scheibentopf 14 dienen.

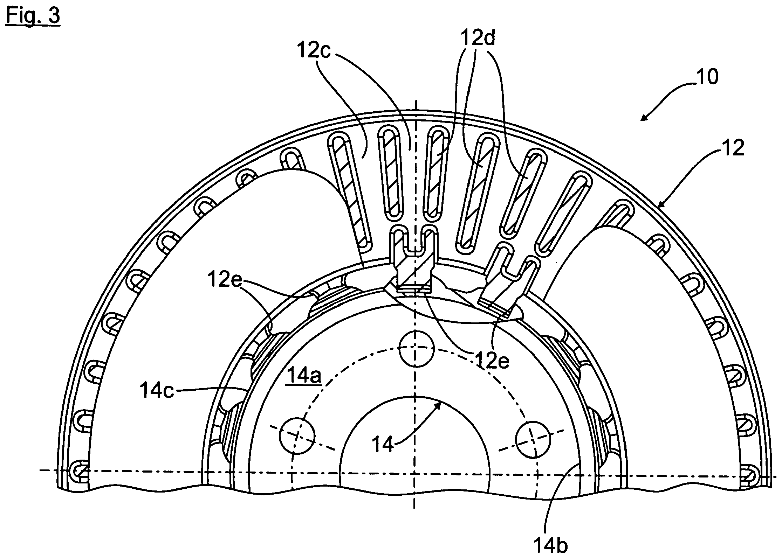

Der Scheibentopf 14 weist im Ausführungsbeispiel einen flanschförmigen Abschnitt 14a auf, der in einen rotationssymmetrischen Nabenabschnitt 14b übergeht, an dem ferner ein ringförmiger Bundabschnitt 14c größerer Wandstärke anschließt und in den die Mitnehmer 12e des Reibrings 12 formschlüssig eingegossen sind (Fig. 1 und 3).

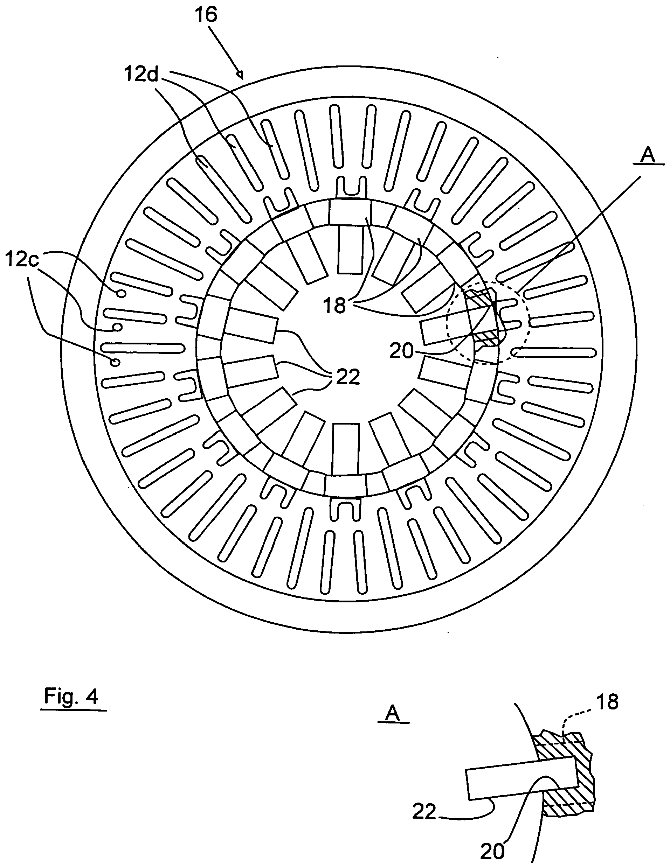

Der Reibring 12 (Fig. 2) ist aus einer GG-Legierung im Sandgussverfahren mit einem verlorenen Innenkern 16 (Fig. 4) hergestellt.

Der Innenkern 16 aus einer Sand- und Bindermischung ist gemäß Fig. 4 scheibenförmig gestaltet, wobei die ersichtlichen Freiräume die mit Metallschmelze zu füllenden Stege 12d des Reibringes 12 darstellen, während die radial nach innen ragenden Mitnehmer 12e durch in Umfangsrichtung aneinander gereihte Butzen 18 mit der Außenkonfiguration der Mitnehmer 12e entsprechenden Hohlräumen 20 ausgeführt sind.

Bei der Herstellung des Innenkerns 16 können nur angedeutete Schieber 22 des Gusswerkzeugs (nicht dargestellt) verwendet werden, die in die Hohlräume 20 ein- bzw. ausfahrbar sind.

Nach dem Pressen des Innenkerns 16 in einem entsprechenden Kernwerkzeug ist dieser in einer zum Beispiel dreiteiligen Gussform mit zwei Außenschalen (nicht dargestellt) mittig derart einsetzbar, dass im Bereich der radial inneren Mitnehmer 12e keine Trennränder oder Formversätze auftreten.

Nach dem Gießen und dem Entfernen des (verlorenen) Innenkerns 16 wird der Reibring 12 (der die in Fig. 1 in gestrichelten Linien angedeutete Außenkontur aufweist) im Bereich der Mitnehmer 12e einem Putzvorgang durch Kugelstrahlen unterzogen, um anhaftende Gießrückstände und scharfkantige Grate zu beseitigen. Die Mitnehmer 12e werden jedoch nicht spanend bearbeitet, sondern bleiben quasi im gießtechnischen Rohzustand.

Gegebenenfalls kann ein Putzvorgang im Bereich der Mitnehmer 12e gänzlich entfallen.

Anschließend wird der Reibring 12 in ein Kokillen-Gießwerkzeug bekannter Ausführung eingelegt und es wird im Kokillen-Gussverfahren eine Al-Leichtmetalllegierung im Schmelzzustand eingebracht, wobei die in die Gießform einragenden Mitnehmer 12e im Bereich des Bundabschnittes 14c - wie aus den Fig. 1 und 3 ersichtlich ist - mit Leichtmetall umgossen werden. Alternativ könnte das Umgießen aber auch durch Sandgießen erfolgen.

Nach der Abkühlung des Verbundgussteils 10 wird dieses in einem nachfolgenden Arbeitsgang spanend auf Maßhaltigkeit (gemäß den ausgezogenen Linien in Fig. 1) fertigbearbeitet.

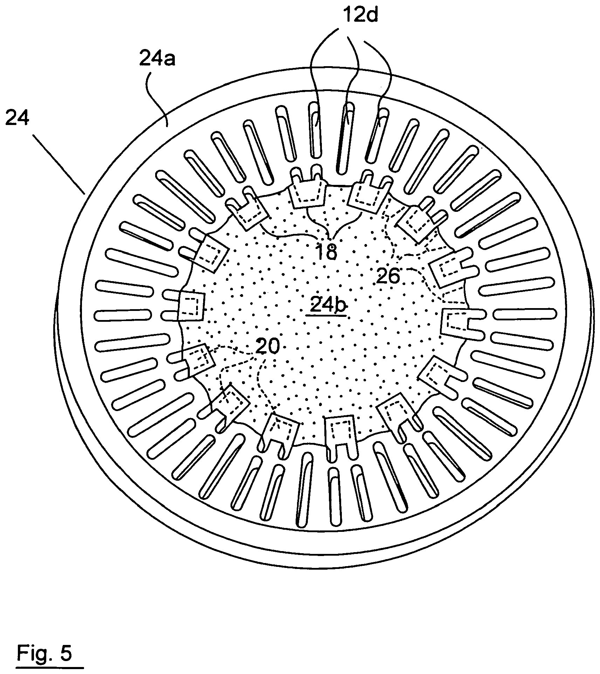

Abweichend zur Fig. 4 kann gemäß den Fig. 5 bis 7 auch ein zweiteiliger Innenkern 24 verwendet sein, der sich aus einem radial äußeren Kernring 24a und einer inneren Kernscheibe 24b zusammensetzt (die innere Kernscheibe 24b ist punktiert gestaltet).

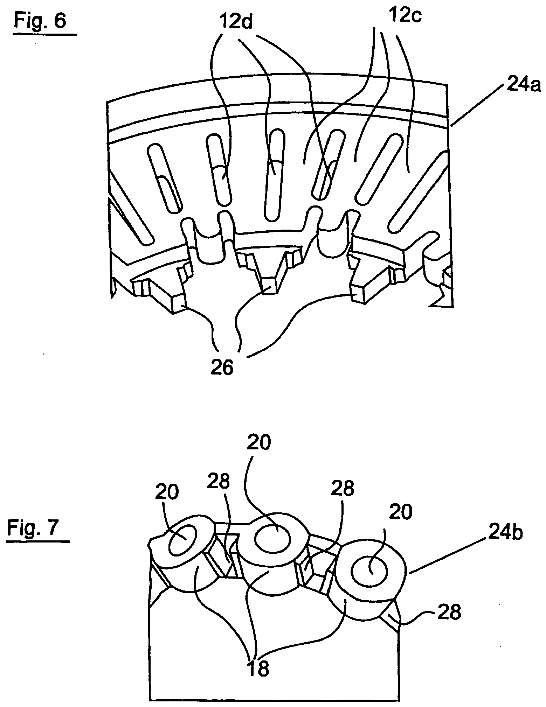

Der Kernring 24a ist mit radial nach innen ragenden, angeformten Kernmarkern 26 (Fig. 6) versehen, die mit korrespondierenden, einseitig offenen Ausnehmungen 28 (Fig. 7) in der Kernscheibe 24b formschlüssig zusammenwirken.

Nach der Herstellung der beiden, den Innenkern 24 bildenden Teilkerne 24a, 24b aus einer Sand-Binder-Mischung werden diese bündig ineinander gefügt (Fig. 5) und so in die weitere Gussform (Außenschalen) eingelegt. Der weitere Gießvorgang und gegebenenfalls Putzvorgang erfolgt wie vorbeschrieben.

Die Querschnittsform der besagten Mitnehmer 12e kann beliebig, zum Beispiel kreissymmetrisch, elliptisch, rechteckförmig oder quadratisch, ausgeführt sein.

Anstelle der angeführten Legierungen (GG bzw. Al) können auch andere, gießtechnisch im Verbundgussverfahren verarbeitbare Werkstoffe verwendet sein.

Alternativ zu dem beschriebenen Sandgussverfahren kann zur Herstellung des Reibrings 12 der Bremsscheibe 10 auch das Lost Foam Verfahren eingesetzt werden, bei dem der verlorene Kern durch ein Schaumstoffmodell gebildet ist. Dieses Schaumstoffmodell wird zunächst mit einer dünnen keramischen Schlichte überzogen und anschließend in einen binderfreien Formstoff eingeformt.

Beim Abguss des Reibringes 12 verdampft dann die einströmende, heiße Metallschmelze das Schaumstoffmodell und füllt gleichzeitig den entstehenden Hohlraum unter Bildung der Stege 12d und der Mitnehmer 12e präzise auf; es entsteht ein genaues Abbbild des Schaumstoffmodells. Gleichzeitig sorgt ein an den Formstoff angelegtes Vakuum für eine ausreichende Formstabilität und das vollständige Absaugen der Verbrennungsprodukte des Schaumstoffmodells.

Nach dem Entnehmen des Reibrings 12 aus dem Gießwerkzeug wird dieser wie vorbeschrieben im Verbundgussverfahren mit dem Scheibentopf 14 verbunden.

## Patentansprüche

1. Verfahren zum Herstellen einer Verbundguss-Bremsscheibe für Scheibenbremsen, insbesondere von Kraftfahrzeugen, bei dem eine ringförmige Reibscheibe (12) mit mehreren, radial nach innen und/oder nach außen ragenden Mitnehmern (12e) in einem ersten Gießvorgang mit verlorenem Kern (16; 24) dergestalt vorgegossen wird, dass der Kern die Mitnehmer direkt aus- bzw. abbildet, und dass anschließend der Reibring (12) in eine Gießform eingelegt und an dessen Mitnehmer (12e) in einem zweiten Gießvorgang ein Scheibentopf (14) angegossen wird, wobei die Reibscheibe (12) dem zweiten Gießvorgang ohne spanende Bearbeitung der Mitnehmer (12e) zugeführt wird.

2. Verfahren nach Anspruch 1, **dadurch gekennzeichnet, dass** die Reibscheibe (12) und/oder deren Mitnehmer (12e) nach dem ersten Gießvorgang einem spanlosen Putzvorgang unterzogen werden.

3. Verfahren nach Anspruch 2, **dadurch gekennzeichnet, dass** als Putzvorgang eine entgratende Strahlbehandlung, insbesondere Kugelstrahlen, eingesetzt wird.

4. Verfahren nach einem oder mehreren der vorhergehenden Ansprüche, **dadurch gekennzeichnet, dass** der Reibring (12) ein innenbelüfteter Reibring der Bremsscheibe ist, wobei bei dem Gießverfahren mit verlorenem Kern ein die Kühlkanäle (12c) im Reibring (12) abbildender, mittlerer, scheibenförmiger Innenkern (16; 24) verwendet wird und dass der Innenkern (16; 24) die Mitnehmer (12e) unmittelbar mit abbildet.

5. Verfahren nach Anspruch 4, **dadurch gekennzeichnet, dass** der scheibenförmige Innenkern (24) zweiteilig ausgeführt wird, wobei ein radial äußerer Kernring (24a) die die Kühlkanäle (12c) begrenzenden Stege (12d) und eine innere, in den Kernring (24) über Kernmarken (26, 28) formschlüssig eingesetzte Kernscheibe (24b) die Mitnehmer (12e) über entsprechend angeformte Butzen (18) abbildet.

6. Verfahren nach einem der vorhergehenden Ansprüche, **dadurch gekennzeichnet, dass** der Reibring (12) im Sandgussverfahren hergestellt wird.

7. Verfahren nach einem der vorhergehenden Ansprüche 1 bis 5, **dadurch gekennzeichnet, dass** der Reibring (12) im Lost Foam Verfahren hergestellt wird.

8. Verfahren nach einem der vorhergehenden Ansprüche, **dadurch gekennzeichnet, dass** der Reibring (12) aus einer Grauguss-Legierung und/oder der Scheibentopf (14) im Kokillengussverfahren oder im Sandgussverfahren aus einer Leichtmetalllegierung hergestellt wird.

## Claims

1. Method for manufacturing a composite casting brake disk for disk brakes, in particular of motor vehicles, wherein a circular friction disk (12) with multiple catches (12e) protruding radially inwards and/or outwards is pre-cast in a first casting process with lost core (16; 24) in such a way that the core directly forms or shapes the catches, and subsequently the friction ring (12) is inserted into a casting mould and a disc chamber (14) is cast onto the catch (12e) of the friction ring in a second casting process, wherein the friction disk (12) is fed to the second casting process without machining of the catches (12e).

2. Method according to claim 1, **characterised in that** the friction disk (12) and/or its catches (12e) are subjected to a non-cutting cleaning process after the first casting process.

3. Method according to claim 2, **characterised in that** a deburring blasting treatment, in particular shot blasting, is used as cleaning process.

4. Method according to one or more of the preceding claims, **characterised in that** the friction ring (12) is an internally ventilated friction ring of the brake disk, wherein a central disk-shaped inner core (16; 24) depicting the cooling channels (12c) in the friction ring (12) is used in the casting process with lost core and the inner core (16; 24) also directly depicts the catches (12e).

5. Method according to claim 4, **characterised in that** the disk-shaped inner core (24) is formed as a two-part piece, wherein a radial outer core ring (24a) depicts the webs (12d) bordering the cooling channels (12c), and an inner core disk (24b) form-fittingly inserted into the core ring (24) via core marks (26, 28) depicts the catches (12e) via correspondingly formed slugs (18).

6. Method according to any of the preceding claims, **characterised in that** the friction ring (12) is manufactured in a sand casting process.

7. Method according to any of the preceding claims 1 to 5, **characterised in that** the friction ring (12) is manufactured in a lost foam process.

8. Method according to any of the preceding claims, **characterised in that** the friction ring (12) is made of a grey cast iron alloy, and/or the disc chamber (14) is manufactured in a permanent mould casting process or is made of a light metal alloy in a sand casting process.

## Revendications

1. Procédé de fabrication d'un disque de frein en coulée composite pour des freins à disques, en particulier de véhicules automobiles, dans lequel un disque de friction (12) annulaire avec plusieurs entraîneurs (12e) dépassant de façon radiale vers l'intérieur et/ou vers l'extérieur est coulé au préalable dans une première opération de coulée à noyau perdu (16; 24) de telle sorte que le noyau forme ou reproduit directement les entraîneurs et dans lequel l'anneau de friction (12) est ensuite placé dans un moule de coulée et, au niveau de ses entraîneurs (12e), une cloche de disque (14) est ensuite coulée dans une deuxième opération de coulée, le disque de friction (12) étant amené à la deuxième opération de coulée sans usinage par enlèvement de copeaux des entraîneurs (12e).

2. Procédé selon la revendication 1, **caractérisé en ce que**, après la première opération de coulée, le disque de friction (12) et/ou ses entraîneurs (12e) sont soumis à une opération de nettoyage sans enlèvement de copeaux.

3. Procédé selon la revendication 2, **caractérisé en ce que**, comme opération de nettoyage, on utilise un traitement au jet d'ébavurage, en particulier un grenaillage.

4. Procédé selon une ou plusieurs des revendications précédentes, **caractérisé en ce que** l'anneau de friction (12) est un anneau de friction ventilé du disque de frein, procédé dans lequel on utilise lors du procédé de coulée à noyau perdu un noyau interne (16 ; 24) en forme de disque, central et reproduisant les canaux de refroidissement (12c) dans l'anneau de friction (12) et le noyau interne (16 ; 24) reproduit directement les entraîneurs (12e).

5. Procédé selon la revendication 4, **caractérisé en ce que** le noyau interne (24) en forme de disque est réalisé en deux parties, procédé dans lequel un anneau de noyau (24a) de façon radiale à l'extérieur reproduit les traverses (12d) délimitant les canaux de refroidissement (12c) et un disque de noyau (24b) intérieur, placé par concordance de forme dans l'anneau de noyau (24) par l'intermédiaire de repères de noyau (26, 28), reproduit les entraîneurs (12e) par l'intermédiaire de plots (18) moulés avec une forme correspondante.

6. Procédé selon l'une des revendications précédentes, **caractérisé en ce que** l'anneau de friction (12) est fabriqué dans un procédé de coulée en sable.

7. Procédé selon l'une des revendications précédentes 1 à 5, **caractérisé en ce que** l'anneau de friction (12) est fabriqué dans un procédé de moulage à modèle perdu.

8. Procédé selon l'une des revendications précédentes, **caractérisé en ce que** l'anneau de friction (12) est fabriqué en un alliage de fonte grise et/ou la cloche de disque (14) est fabriquée dans un procédé de coulée en coquille ou dans un procédé de coulée en sable à partir d'un alliage de métal léger.
